# EUROPEAN PATENT SPECIFICATION

(11) **EP 3 378 641 B1**
(45) Date of publication and mention of the grant of the patent: **18.12.2019**
(21) Application number: 18162898.3
(22) Date of filing: 20.03.2018
(51) Int. Cl.: B32B 5/02, B32B 7/00, B32B 7/04, B32B 7/12, B32B 29/00, B32B 29/02, B32B 29/06, B32B 29/08, B32B 3/12, B32B 3/26, B32B 3/28, B32B 15/12, B32B 21/06

(54) **FOOD PACKAGING**
LEBENSMITTELVERPACKUNG
CONDITIONNEMENT ALIMENTAIRE

(30) Priority: 20.03.2017 GB 201704412; 20.03.2017 GB 201704413; 28.02.2018 GB 201803232
(43) Date of publication of application: 26.09.2018
(73) Proprietor: Havi Global Solutions Europe Limited, London EC4M 7WS (GB)
(72) Inventor: DAMARELL, Keith, Uxbridge, Middlesex UB11 1EZ (GB); SMITH, Nicola, Uxbridge, Middlesex UB11 1EZ (GB)
(74) Representative: Warren, Caroline Elisabeth

(56) References cited:
- WO-A1-95/35204
- WO-A1-2006/087731
- WO-A1-2010/039442
- US-A1- 2007 131 667

## Description

The present invention relates to thermally insulating food packaging and more particularly to containers for storing or transporting food when the temperature of the food is significantly different to that of the surrounding environment.

Containers for food are used throughout the service industry, whether to serve food to a customer at a service outlet or to contain the food during transport in the case of home delivery services. A significant requirement of these containers is maintaining the food at an acceptable temperature, such as keeping hot food hot for the duration of delivery. Another problem, particularly with hot food, is that moisture from the food may result in the food becoming soggy and unpalatable during transport if moisture is retained or may transfer significant heat away if the moisture is allowed to escape.

Previous containers have been formed of materials such as expanded polystyrene (EPS). However previous approaches have so far failed to solve both problems in a satisfactory manner. For example, the polystyrene box, while providing significant insulation if the box is closed, fails to address the problem of moisture leading to soggy food. Alternatives where the food container allows the moisture to be lost to the environment introduce significant heat losses. The invention is particularly concerned with disposable containers. In addition to these food quality concerns, containers made of material such a polystyrene present significant environmental concerns due to the inability to recycle or compost the material. Containers of paper or card tend to have lesser insulation and the card tends to degrade with moisture exposure, making them less suitable for longer storage, unless made particularly bulky.

For non-food items, desiccant materials, or pouches of desiccant material, may be used to absorb moisture within a container. However, such desiccant materials are not safe for human consumption and are not suitable for storage near to items of food or drink.

Background art is provided in WO 2006/087731 A1, US 2007/131667 A1, WO 2010/039442 A1 and WO 95/35204 A1.

WO 2006/087731 A1 discloses a ventilation board, an insulating board, a ventilation system, and articles and architectural applications comprising said ventilation board and a method of manufacturing the ventilation board.

US 2007/131667 A1 discloses a food containment device comprising an insulating layer sandwiched between layers of construction materials, and which optionally includes a plurality of convection openings to emit moisture vapor or humidity emanating from a hot food product within the container.

WO 2010/039442 A1 discloses a method of making a corrugating linerboard including supplying a web of coated linerboard having a first side, a second side and a thickness defined by a distance between the first side and the second side, the first side being coated with a moisture-repellant material; and impregnating the coated linerboard with a hydrophobic material from the second side such that the hydrophobic material penetrates into the thickness of the coated linerboard.

WO 95/35204 A1 discloses a method for forming a corrugated paperboard container and a container made therefrom having a first layer of flat paperboard to which is attached a second layer of contoured paperboard, said contoured layer having a plurality of flutes.

According to one aspect, a food packaging material for enclosing food is described, the material comprising, a first, moisture-permeable inner layer, a second, moisture-impermeable outer layer, and a third, insulating moisture-tolerant layer disposed between the first and second layers and spacing the first and second layer apart, wherein the third layer has an undulating form comprising voids and wherein the first, second and third layers are arranged such that moisture emanating from food within the container passes through the first layer and the third layer and condenses on the second, moisture-impermeable outer layer, and wherein the first, second and third layers comprise paper or cardboard.

In some embodiments, the third layer has a form that undulates in two perpendicular directions across its surface, may be an embossed layer, optionally a cup-and-ball embossed layer or a square-embossed or triangular-embossed layer. In another embodiment, the third layer comprises a corrugated or honeycomb material, optionally a b-flute corrugated material.

In some embodiments, the third layer is attached to the first and second layers to resist shear movement between the first and second layers and to provide rigidity to the food packaging material. This may be useful for example if the packaging material is to be made into a box or other structure.

Optionally, the first layer and/or the third layer is perforated.

Optionally, the second layer comprises an inner surface and an outer surface, the third layer being arranged next to the inner surface of the second layer and the material further comprising a coating on the inner surface of the second layer. The coating may render the second layer moisture impermeable and/or enhance the insulating properties of the second layer. The coating may encourage condensation of moisture onto the second layer. The coating may be an infrared-reflective or heat-reflective coating, optionally a vacuum deposited metallised coating. This can help retain the heat within the packaging.

The first layer may comprise an inner surface and an outer surface, the third layer being arranged next to the outer surface of the first layer, the material further comprising a grease resistant coating disposed on the inner surface of the first layer.

The material may further include a fourth, moisture-permeable liner layer attached to the inner surface of the first inner layer, the fourth liner layer having an undulating form, optionally wherein the fourth liner layer is perforated.

The material may further include at least one further, insulating moisture-tolerant layer having an undulating form comprising voids.

Preferably, the grammage of the material is less than 300gsm, preferably around 200gsm.

A further aspect provides a method of manufacturing a food packaging material, the method comprising providing a first web of a moisture-permeable material, providing a second web of a moisture-impermeable material, providing a third web of an insulating moisture-tolerant material, the material of the third web having an undulating form comprising voids, arranging the third web between the first and the second web, spacing the first and the second webs apart and coupling the material of the third web to the materials of the first and the second webs, and wherein the first, second and third layers comprise paper or cardboard.

According to an aspect of the invention, there is provided a food container having a form suitable for enclosing food, the material of the container comprising a first moisture-permeable, inner layer, a second moisture-impermeable, outer layer and a third, insulating, moisture-tolerant layer disposed between the first and second layers, the layers being configured so that moisture emanating from food within the container passes through the first layer and is retained within the third layer, wherein the third layer spaces the first and second layer apart and is attached to the first and second layers to resist shear movement between the first and second layers and provide rigidity to the food container.

The middle layer, and in particular its attachment to the first and second layers, may contribute rigidity to the container, allowing the container to be formed into a box. The insulating properties of the middle layer, and optionally also the first and second layers, reduces the transfer of heat between the inside and the outside of the container.

The resistance to shear movement can be provided by fixing the first and second layers at various points to the third layer, in particular using adhesive at the points at which the first and second layers meet the third layer, or at intermittent regular points over the surface of the third layer. The rigidity of the third layer then resists relative movement between the first and second layers in the plane of the layers, which can provide a stable structure that can form a food container such as a box.

According to an advantageous arrangement, the middle layer of the material may comprise corrugated material. This may provide a rigid container with voids which can retain air that has permeated through the inner layer, and in particular can contain condensed moisture to keep it away from the contents of the container. Voids within the third layer are defined by walls or surfaces onto which moisture within the trapped air can condense. A mid-size corrugated material, such as a b-flute material, has been found to be particularly suitable for a food container. Tighter corrugation can reduce the amount of moist air that is able to flow into the middle layer whereas a less contoured corrugation decreases the surface area available for moisture to condense and can reduce the ability of the middle layer to retain its structural integrity.

Standard US corrugated flute parameters are set out in the table below:

| Flute Designation | Flutes per linear foot | Flute thickness (in) | Flutes per linear meter | Flute thickness (mm) |
|---|---|---|---|---|
| A flute | 33 +/- 3 | 3/16 | 108 +/- 10 | 4.8 |
| B flute | 47 +/- 3 | 1/8 | 154 +/- 10 | 3.2 |
| C flute | 39 +/- 3 | 5/32 | 128 +/- 10 | 4.0 |
| E flute | 90 +/- 4 | 1/16 | 295 +/- 13 | 1.6 |
| F flute | 125 +/- 4 | 1/32 | 420 +/- 13 | 0.8 |

According to an advantageous arrangement, the middle layer may comprise treated corrugated paper or card. This may provide a rigid, moisture tolerant and recyclable middle layer of the container that is also compostable.

In one embodiment, the first layer is perforated. Perforations can be used to enhance the ability of the first layer to allow the passage of moisture, or moist air, therethrough. This may facilitate moisture reaching the middle layer of the container material, preventing significant condensation within the container, or significant deterioration of the first layer, that may cause deterioration in food quality.

According to an advantageous arrangement, the outer layer of the container may be rendered non-moisture permeable by means of a coating on the inner surface thereof. This may prevent the transport of moisture and heat across the boundary of the container while not preventing the flow of moisture from inside the container to the middle layer of the container.

According to an advantageous arrangement, the coating on the inner surface of the outer layer may serve to enhance the insulation of the container. This may allow the temperature of the contents of the container to be maintained at the original temperature for longer.

According to an advantageous arrangement, the coating on the inner surface of the outer layer may be an infrared (IR) reflective coating. This may reduce radiative heat crossing the boundary of the container.

According to an advantageous arrangement, the coating may comprise a vacuum deposited metallised or metallic coating such as an aluminium coating. This may provide an IR reflective coating to prevent radiative heat loss while also being recyclable.

According to an advantageous arrangement, the inner layer may further comprise a grease resistant coating disposed on the inner surface of the inner layer to inhibit grease or grease-like products from leaking out of or damaging the container.

According to an advantageous arrangement, the grease resistant coating may comprise a plant based, water based substance. This may provide a recyclable grease resistant layer.

According to an advantageous arrangement, the container may further comprise a heat sealable coating disposed on the inner surface of the inner layer or grease resistant layer to assist in the manufacture of the container or for use when serving food within the container. The grease resistant layer may provide heat sealable functionality in some embodiments so that only a single layer may be necessary.

According to an advantageous arrangement, the materials of the container may all be recyclable, biodegradable and/or compostable. This can reduce the negative impact of such containers on the environment compared to the EPS based prior art. In particular, any of the containers described herein may be manufactured without the use of any plastics based materials, or at least avoiding the use of any non-recyclable plastics-based materials.

In one embodiment, the first layer, or a coating applied to the inner surface of the first layer, comprises a material authorised for use with food products.

It will be appreciated that the thickness and grammage of the three layers may be adjusted according to the desired rigidity, strength, insulating and moisture-absorbing requirements of the particular container. However, typically, the grammage of the third layer will be at least 50gsm, preferably at least 80gsm; the grammage of the third layer will be less than 300gsm, preferably less than 200gsm. The grammage of the first layer will be at least 30sgm, preferably at least 50gsm; typically the grammage of the first layer will be less than 300gsm, preferably less than 200gsm. The grammage of the second layer will be greater than 30gsm,preferably greater than 50gsm, and less than 300gsm, preferably less than 200gsm.

While it will be appreciated that the container may take any shape or form that is suitable for carrying the intended food item, in one advantageous arrangement, the container may be in a clamshell form, comprising a top section and a bottom section which can be closed to form an enclosed, preferably fully enclosed, optionally generally sealed or airtight container to trap moisture, emanating from the food, within the container. By generally sealed or airtight, it is meant that there are no significant open vents or direct airflow passages in the closed condition in normal use, and substantial flow of air is inhibited in normal use. However small gaps, perhaps of the order of a millimetre may be present, particularly due to tolerances and as the container will be deformable, and positive sealing against a pressure difference is not required.

Optionally, a permeability coating is provided on the first layer to control the permeability of the first layer. Such a permeability coating could be used to reduce the permeability of the first layer to prevent saturation of the inner moisture-tolerant layer.

According to an aspect of the invention, there is provided a web of material for manufacture of insulating food packaging comprising a first moisture permeable, inner layer, a second moisture-impermeable, outer layer, and a third, insulating, moisture tolerant layer disposed between the first and second layers and spacing the first and second layers apart, wherein the third layer is attached to the first and second layers to resist shear movement between the first and second layers and provide rigidity to the material.

Optionally, the first moisture permeable, inner layer is perforated. Optionally, a coating is provided on the inner surface of the second layer, wherein the coating renders the second layer moisture impermeable and/or enhances the insulating properties of the second layer.

According to an advantageous arrangement, a blank for forming a food packaging container may be cut from a web of the material described above, the blank having folds or score lines formed therein to form an enclosed container, preferably a fully enclosed container, further preferably a sealed or airtight container, for containing a food item.

According to an aspect of the invention, there is provided a method of manufacturing an insulating food packaging material, the method comprising providing a first web of a first moisture-permeable material, providing a second web of a second moisture-impermeable material, providing a third web of a third insulating, moisture tolerant layer disposed between the first and second layers and spacing the first and second layers apart and attaching the third layer to each of the first and second layers to resist shear movement between the first and second layers and provide rigidity to the material.

According to an advantageous arrangement, the second web of materials may be rendered moisture impermeable by depositing a coating, optionally a metallic or metalized coating, on a surface thereof and wherein the moisture tolerant material is bonded to the coated surface. This prevents moisture coming from a food item within the container escaping, keeping the heat the moist air carries within the container. Furthermore, it causes this moisture to condense within the container where the release of latent heat can be directed back towards the food item. Additionally, or alternatively, a coating may be provided to enhance the insulating properties of the second layer.

According to an advantageous arrangement, the moisture permeability of the first, inner layer is enhanced by perforating the first material, allowing moisture to be carried into the middle layer where it can condense and the latent heat released can be directed back towards the food item. The first layer may be provided as a ready-perforated layer or may be perforated as part of the manufacturing process, enabling the degree of perforation to be controlled to suit the end purpose of the web or the container that is being manufactured. The first layer may be perforated prior to being attached to the third layer or after attachment to the third layer.

Optionally, the first material is provided with a grease resistant coating on a surface thereof and the moisture tolerant material is attached to the other surface of the first material.

Optionally, the moisture tolerant material comprises a treated corrugated paper-based material.

According to a further aspect, there is provided a flexible food packaging, the packaging comprising a first moisture-permeable inner layer, the first layer comprising a plurality of perforations, a second moisture-impermeable outer layer having an inner and an outer surface, the second layer comprising a heat-reflective coating on the inner surface, and a third, insulating, middle layer, disposed between the first and second layers, the layers being configured so that moisture emanating from food within the container passes through the first layer and is retained within the third layer.

In one embodiment, the third layer comprises a non-woven fibre, optionally a cellulose-based non-woven fibre.

In one embodiment, the second layer comprises a moisture-impermeable coating on the inner surface thereof, optionally wherein the heat-reflective coating comprises the moisture-impermeable coating.

Moisture permeability of the first layer may be controlled by application of a permeable coating on the outer surface of the first layer.

In one embodiment, the heat-reflective coating comprises a vacuum deposited metallised coating.

Optionally, the first layer comprises an inner surface and an outer surface and the inner surface further comprises a grease-proof or grease-resistant coating, preferably comprising or consisting of a plant based, water based substance.

In one embodiment, the first layer further comprises an adhesive coating over at least a portion of the surface, optionally wherein the adhesive coating comprises a grease-proof coating. The adhesive coating may be a heat sealable layer.

Optionally, the container consists of recyclable, biodegradable and/or compostable materials. In such embodiments, the container may be entirely recyclable, biodegradable and/or compostable.

In a particular embodiment, the third layer is thicker than either of the first and the second layers. Optionally, the grammage of the third layer is at least 50gsm, preferably at least 80gsm, optionally wherein the grammage of the third layer is less than 300gsm, preferably less than 200gsm.

The first and second layers may comprise paper-based materials.

According to a further aspect, there is provided a web of material for manufacture of insulating food packaging comprising a first moisture permeable, inner layer, the first layer comprising a plurality of perforations, a second moisture-impermeable outer layer having an inner and an outer surface, the second layer comprising a heat-reflective coating on the inner surface, and a third, insulating, middle layer, disposed between the first and second layers.

A blank for forming a flexible food packaging container may cut from a web according to the previous aspect, the blank having folds or score lines formed therein to form a container, preferably a bag, for containing a food item. In other embodiments, the blank may be used to form an enclosed container, preferably a fully enclosed container, further preferably a sealed or airtight container, for containing a food item.

According to a further aspect, there is provided a method of manufacturing an insulating food packaging material comprising the steps of providing a first moisture-permeable inner layer, the first layer comprising a plurality of perforations, providing a second moisture-impermeable outer layer having an inner and an outer surface, the second layer comprising a heat-reflective coating on the inner surface, and providing a third, insulating, middle layer, disposed between the first and second layers, the layers being configured so that moisture emanating from food within the packaging material passes through the first layer and is retained within the third layer.

Optionally, at least a portion of the first layer comprises a heat-sealing coating, the method further comprising heat treating the heat-sealing coating to secure a plurality of layers of the food packaging.

In one embodiment, the heat-reflective coating comprises a metalised coating.

Optionally, the heat-reflective coating is moisture impermeable.

In one embodiment, the first layer has an inner and an outer surface and is provided with a grease resistant coating on the inner surface, wherein the third layer is arranged adjacent to the outer surface of the first material.

Optionally, the first layer is provided with a permeability coating to control the permeability of the first layer.

As the skilled person will appreciate, features of the food container and the web from which it is made may also be applied to the flexible food packaging and the material from which it is made and vice versa.

Embodiments will now be described, by way of example, with reference to the accompanying drawings in which:
Figure 1 shows a prior art style clam shell food container;
Figure 2 shows a clam shell food container that has been modified such that when the lid is closed the container is generally airtight;
Figure 3, not part of the present invention, shows a three layered insulating material;
Figure 4 shows a three layered insulating material where the middle layer is a corrugated material;
Figure 5 shows a three layered insulating material where the middle layer is a corrugated material and an infrared (IR) reflective layer is disposed on the inner surface of the outer layer;
Figure 6 shows a three layered insulating material where the middle layer is corrugated material, an infrared (IR) reflective layer is disposed on the inner surface of the outer layer and the inner layer is perforated;
Figure 7 shows a three layered insulating material according to a particularly preferred embodiment for making a box where the middle layer is corrugated material, an infrared (IR) reflective layer is disposed on the inner surface of the outer layer, the inner layer is perforated and a grease resistant layer is disposed on the inner surface of the inner layer;
Figure 8 shows a graph depicting water retention within containers forming the prior art and an embodiment of the present invention;
Figure 9 shows a graph depicting heat retention within containers forming the prior art and an embodiment of the present invention;
Figure 10, not part of the present invention, shows a three layered insulating material wherein the middle layer is insulating,
the inner layer is moisture permeable and the outer layer is non-moisture permeable;
Figure 11, not part of the present invention, shows the three layered material of Figure 10 wherein the middle layer is a non-woven fibre and a non-moisture permeable coating is disposed on the inner surface of the outer layer;
Figure 12, not part of the present invention, shows the three layered material of Figure 11 wherein the middle layer is a cellulose based non-woven fibre and an additional insulating coating is disposed on the inner surface of the outer layer;
Figure, not part of the present invention, shows the three layered material of Figure 12, further incorporating the non-moisture permeable coating of Figure 11 and a coating on the outer surface of the inner layer;
Figure 14, not part of the present invention, shows the three layered material of Figure 13, further comprising a heat sealing layer disposed on the outer surface of the inner layer;
Figure 15, not part of the present invention, shows the three layered material of Figure 14 wherein the inner layer is perforated;
Figure 16, not part of the present invention, shows the material of Figure 15 further comprising a grease resistant coating disposed on the inner surface of the inner layer;
Figure 17 is a schematic diagram of a material having a cup-and-ball profile;
Figure 18a is a schematic diagram of a 3-layer packaging material;
Figure 18b is a schematic diagram of a 5-layer packaging material without a reinforced layer;
Figure 18c is a schematic diagram of a 4-layer packaging material;
Figure 18d is a schematic diagram of a 5-layer packaging material having a reinforced layer;
Figure 19 is a schematic diagram of a 4-layer packaging material having perforated layers;
Figure 20 is a schematic diagram of the packaging material of Fig. 19 incorporating a metallised layer;
Figure 21 is a schematic diagram of a further 4-layer packaging material; and
Figure 22 is a schematic diagram of a 4-layer packaging material in use.

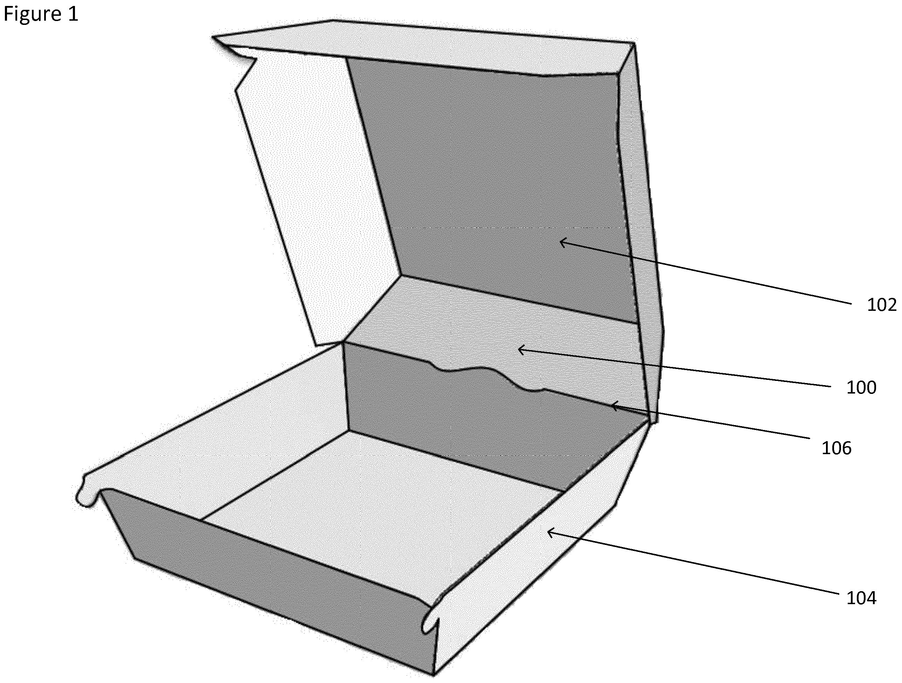

Figure 1 shows a generic prior art style clamshell food container 100. This is a commonly used design in the food service industry for serving and transporting food such as burgers. The container comprises a top section 102 and a bottom section 104 wherein these sections are joined by a flexible section 106 which allows movement between an open state and a closed state. The flexible section 106 is continuous with both the top 102 and bottom section 104 and is made through pre-scoring or pre-creasing. In this generic clam shell food container 100, the container is rigid as the material it is made from is rigid.

This choice of box design assists in confining the heat, or indeed lack of heat, of any food product, placed in it. However, there is still significant flow of air in and out of the box as the sides of the box do not effectively seal the box in its closed state. Using the example of hot food placed in this container, the box does reduce the flow of heated air from the food into the environment. This often carries sufficient moisture away from the food to prevent it becoming soggy and unpalatable however this flow of heated air also cause a reduction in the insulating ability of the box.

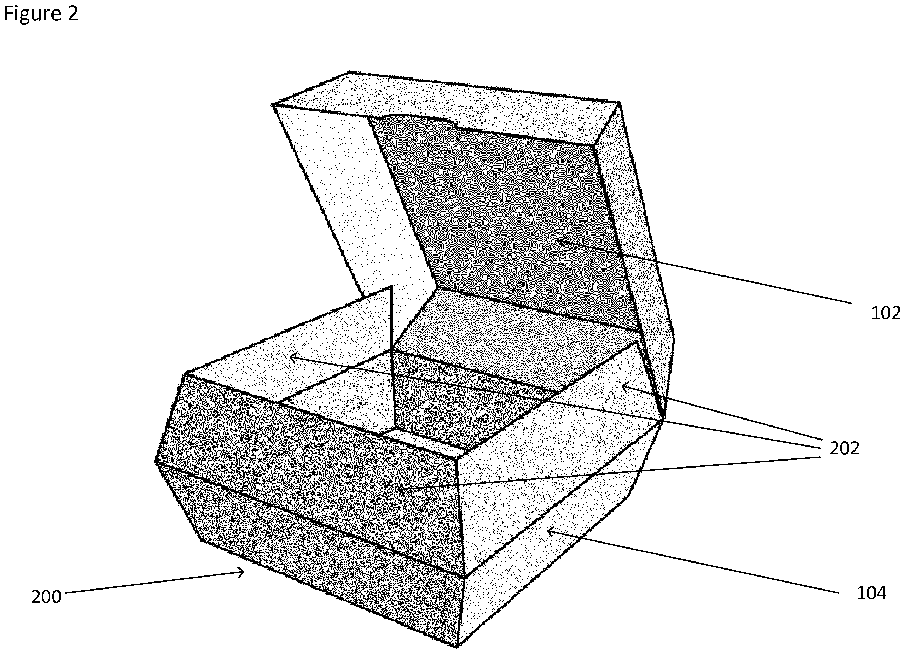

Figure 2 shows a different food container design 200. This design builds on the known clamshell design and provides extended sides 202 on the bottom section 104 of the container, allowing the box to be generally air tight, sealed or enclosed, wherein generally air tight means that there are no large gaps or vents through which air can leave or enter the container. This can be achieved by forming the container such that the bottom section 104 nests within the top section 102 such that there are no significant air gaps, at least when the container is not deformed.

The generally airtight nature of the container significantly reduces the flow of heat from or to the contents of the box as the conduction to the air and subsequent transport of heat via air is reduced. Additionally, as the container is generally airtight, meaning that there are no significant air gaps that would allow a flow of air, the moisture is retained within the container, where it will condense and release latent heat. This is a second mechanism that the generally airtight container 200 causes that retains heat within the container.

Taking the example of hot food within the container, the problem of moisture control must be considered. Whereas previously the excess moisture carried in the air could be carried away from the food within the box due to the unsealed nature of the box, this moisture is now retained in the sealed box. The retention of this moisture leads to increased condensation and the accumulation of liquid water within the box, potentially leading to soggy and unpalatable food. This presents a problem to service providers that require a method of serving food that is to be transported or kept warm without reducing the appeal of the food, whether by allowing it to go cold or soggy. This disclosure aims to address this problem, along with others.

The approach to this problem which is discussed here focusses on using a sealed container wherein the material of which it is formed contributes to solving the above mentioned problems with the sealed design.

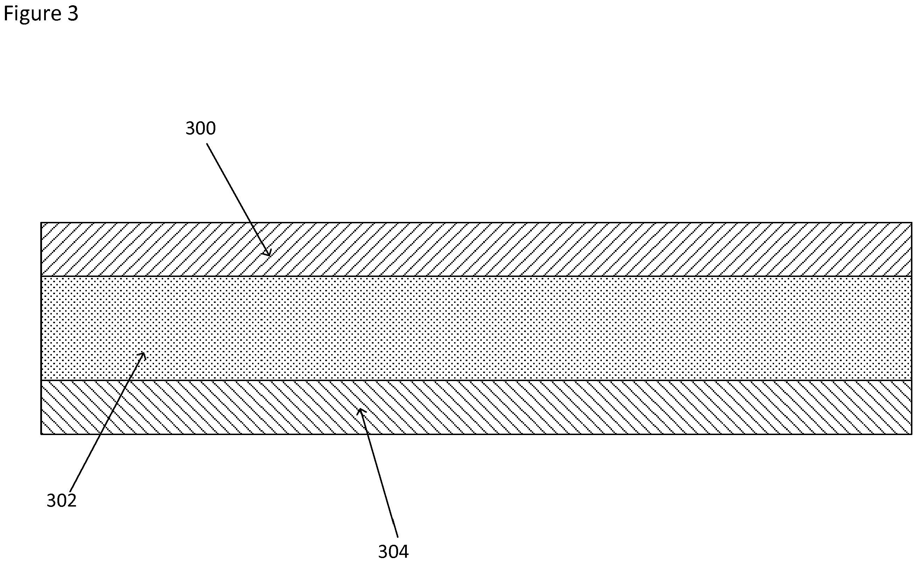

Figure 3 illustrates an embodiment that does not fall within the scope of claim 1. It shows the cross-section of a material comprising a moisture permeable inner layer 304, a middle, insulating, moisture tolerant layer 302 and a non-moisture permeable outer layer 300. As described herein, the middle layer 302 may also provide substantial rigidity to the container, such as forming a box. This may be achieved by spacing the inner 304 and outer layers 302 with the middle layer and attaching the inner and outer layers to the middle layer to resisting shear movement between the inner and outer layers.

As an example of this material being used in a food container, we will consider a container with hot food placed within. The contents of this container can lose heat by three mechanisms, namely convection (or transport), conduction and radiation. The first of these is addressed through design of the container. As mentioned above, the sealed box prevents the flow of heat via the air, out of the box, significantly reducing the heat lost by convection. The second mechanism is addressed by the middle insulating, moisture tolerant layer 302. This is a material with a low thermal conductivity that slows the conduction of heat across the boundary of the container.

With the improved retention of the heat and sealed nature of the container, moisture retention becomes a significant issue. The material depicted in Figure 3 attempts to overcomes these challenges through the use a moisture permeable inner layer 304. This allows the humid, warm air to travel through the inner layer 304, into the moisture tolerant middle layer 302. The humid air is prevented from traveling through the non-moisture permeable outer layer 300 and so can condense within the middle layer 302. The design of this middle layer 302 is such that moisture can condense and the resulting liquid will not significantly affect the structure and/or insulating properties of the middle layer 302, leading to the middle layer 302 being considered moisture tolerant.

The condensation of moisture in the middle layer 302 keeps the condensed water away from the food, preventing it from going soggy, whilst also keeping the heated air within the container. As the water condenses there will be a release of latent heat, this can be used further to maintain the heat of the air within the container as some of it is radiated back into the container. Due to the properties of the moisture tolerant middle layer 302, the condensed water does not significantly impact the structural integrity of the container and the middle layer 302 may continue to provide significant rigidity to the container. This may be achieved by treating the material of the middle layer 302 to achieve high moisture tolerance, such as sizing a paper middle layer 302. As described herein, the material of the middle layer 302 may also be chosen based on its moisture tolerant properties.

One skilled in the art will readily appreciate that plastics materials are generally non moisture permeable whereas cellulose and paper-based materials are generally moisture permeable, unless treated. In addition, paper-based materials tend to degrade and lose structural integrity on exposure to moisture. As used herein, as will be appreciated by one of ordinary skill in the art of container manufacture, references to a layer being moisture permeable or impermeable or tolerant are intended to be taken in the context of a food container intended for temporary storage of a food product.

The first moisture permeable layer should be sufficiently permeable that moisture emanating from a food product can pass through it. Some of course may be retained (it is not an open gap). One very simple test for the required permeability is that if a layer of the material is placed over a beaker of water at boiling point, moisture will be visibly seen to escape through the layer. In a preferred embodiment, perforations are used to enhance permeability of a layer, such as paper treated to be grease or moisture resistant and moisture permeable refers to the overall permeability including perforations.

By moisture tolerant is meant that the material will not degrade unacceptably during the exposure to moisture in a normal application. By moisture impermeable or non-moisture-permeable is meant that in the context, moisture will not readily pass through the material in a normal application. Suitable tests for determining properties of the materials used are those defined by the technical arm of the American Paper and Pulp Association (TAPPI).

In one embodiment, air permeability or porosity of a layer is tested using the TAPPI 547 Sheffield method for testing the air permeance of paper and paperboard. According to this standard, the air permeance of a circular area of paper is measured using a pressure differential of approximately 10kPa. The method measures the air that passes through the test specimen, along with any possible leakage of air across the surface. For the vacuum metalised liner of the outer (or second) layer of the present system, a porosity flow of less than 10 mL/minute provides an appropriate level of porosity.

Water resistance of a layer, in particular of the middle, or third, layer can be tested using the TAPPI 441 Cobb method for determining the water absorptiveness of sized (nonbibulous) paper, paperboard and corrugated fibreboard, which provides a procedure for determining the quantity of water absorbed by nonbibulous paper. According to the standard, the water absorptiveness or Cobb value of the paper is the mass of water absorbed in a specific time by 1 square meter of paper, board or corrugated fibreboard under 1 cm of water. In preferred embodiment, the middle fluted layer of the present system can absorb at least 20gsm or 20 grams per square meter of the paper.

The outer vacuum metalised liner may also be tested to determine a level of non-moisture permeability. In particular, the TAPPI 448 WVTR method can be used to determine the extent to which the outer, or second, layer provides a barrier to water vapour. The TAPPI 448 Water Vapor Transmission Rate of paper and paperboard is tested at a set temperature (of 23degC) and humidity (50% relative humidity) and a preferred second layer prevents the transfer of more than 50g of water vapour per square metre per day under such a test.

To determine the grease resistance of the inner layer, or of a coating applied to the inner layer, the TAPPI 559 Kit method can be used. This method measures the degree of repellence or anti-wicking of paper and boards that have been treated with agents that prevent wetting of the cellulose fibres of the material. Test solutions with components such as castor oil, toluene, heptane and turpentine can be used in the test and the material is given a test rating, or kit rating with a maximum value of 12. Preferably, a grease resistant first or inner layer according to the present system has a kit rating of between 7 and 12.

In further embodiments, one simple exemplary test is that, after exposure to moisture emanating through the first layer when placed over a beaker of water at boiling point for 30 minutes, the rigidity of the material (measured by a bending moment test) is at least 50% of its original value if the container is a box or the tensile strength is at least 50% of its original value if the container is a bag.

As noted above, by moisture impermeable or non-moisture-permeable is meant that in the context, moisture will not readily pass through the material in a normal application. One very simple test is that when placed over the second layer as described above, visible moisture is not seen to escape. As will be appreciated from the disclosure, the moisture impermeable layer can be made from a material, such as a paper-based material, which is ordinarily permeable but is rendered impermeable by a coating, particularly a metallic barrier coating.

It will be appreciated that the layers co-operate. A preferred test of the material is that when placed over a beaker of water at boiling point for 30 minutes with the first layer down and the second layer uppermost, the following is observed:-
1) visible moisture is not seen to pass through the material
2) at the end of the test period, the material has gained weight due to moisture condensing within the third layer; and
3) the structural integrity of the material is not unacceptably degraded, in particular the bonding of the layers has not come apart and the rigidity (in the case of a box) or the tensile strength (in the case of a bag) has not reduced below 50% of its initial value.

For containers intended only to be used for very short term storage, for example within a food service outlet, the duration of the test may be reduced, for example to 10 minutes. Likewise, for longer term transport, a longer duration and/or higher degree of final rigidity/tensile strength may be specified.

Another simple test that a material has the desired properties is that, when placed over a container of water from which substantial evaporation is occurring, which may be at or close to boiling point for a given test period, which may be as little as 5 minutes, under equivalent test conditions the material will gain more weight due to condensation within the middle layer when the first, inner, permeable, layer is lowermost to the water than when the second, outer, impermeable, layer is lowermost.

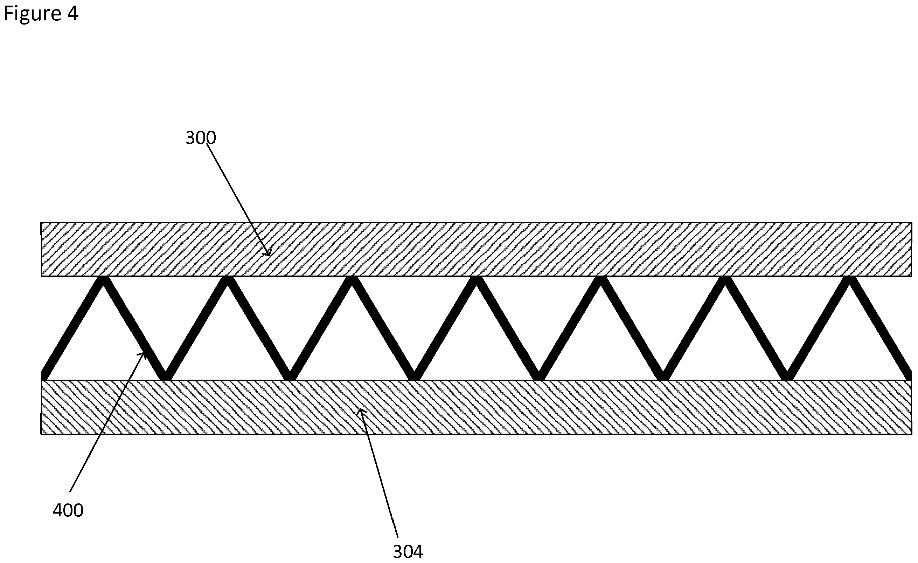

In some embodiments, such as the one depicted in Figure 4, the insulating, moisture tolerant middle layer is formed of corrugated paper 400. This is an example material that provides the required rigidity such as demonstrated in a material such as cardboard. The corrugation provides space or voids for moisture to condense without being absorbed into the paper and compromising the rigidity of the material. The use of a sizing or coating treatment of the corrugated paper improves the moisture tolerance of the paper material, allowing the water to condense in the middle layer 400 of the container material without causing collapse or break up of the container. The sizing or coating treatment may use starch, alkyl ketene dimer (AKD) or rosin to provide the required moisture tolerant properties.

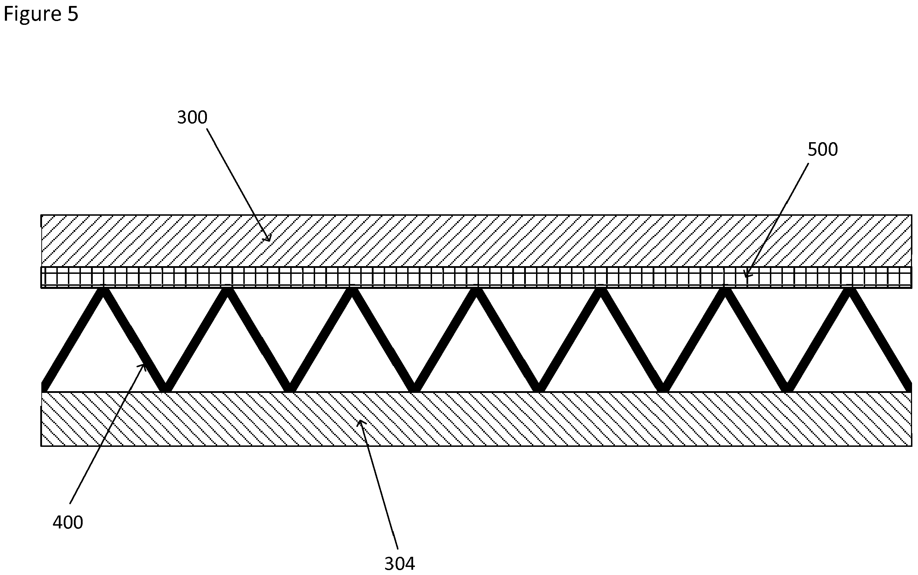

Figure 5 shows the material of Figure 4 with an additional non-moisture permeable insulating layer 500 disposed on the inner surface of the outer layer 300. This is a feature which can help to prevent the moisture of the air within the container escaping to the surrounding environment, keeping the heat in. In addition to this property of this layer, the layer can provide additional insulation to the container, further assisting in maintaining the temperature of the contents of the container. This could be, for example, a layer that helps reduce the radiative heat loss from the container, such as an infrared (IR) reflective layer. This could be formed of any material which has good IR reflection properties, for example an aluminium foil or coating. A good IR reflective layer may be formed by vacuum metalization of the outer paper layer; this combined the required insulating properties with recyclability and composability. It will be appreciated that a similar reflective, preferably metalised, coating or liner may be applied to the inside of the outer layer in other embodiments of the food containers described herein.

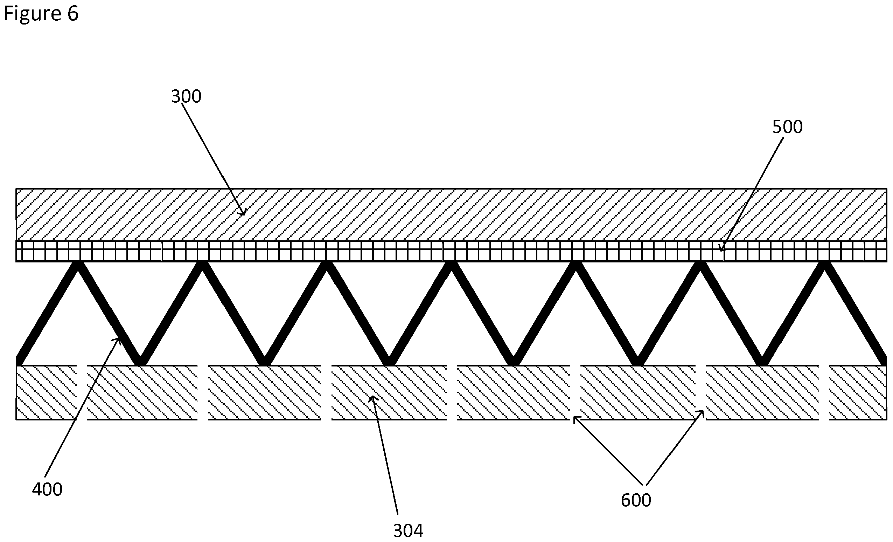

While the inner layer 304 is required to be moisture permeable, this can be achieved in many ways. Firstly, the material could be a paper layer, which, without coatings, can often be considered moisture permeable. However, in some cases the moisture permeability of the chosen material may not be sufficient to achieve the desired transport of moisture away from the food. This can be overcome by perforating 600 the inner layer 304 of the container, allowing a greater air, and moisture, flow into the middle layer of the container. This can be seen in Figure 6 and helps prevent the contents of the container from becoming soggy. The perforation 600 of the inner layer 304 only allows the moisture away from the food but not out of the container.

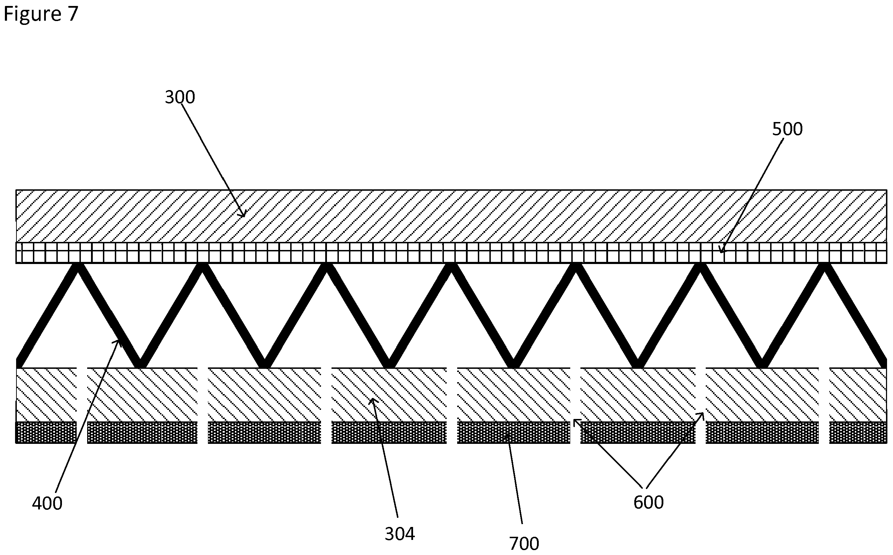

As the food contents of the container is likely to contain grease or other food material that has a liquid component, it may be beneficial to provide a grease resistant layer 700 that prevents these materials from seeping out of the container or causing degradation to the container. This can be seen in Figure 7, in which a grease resistant layer or coating 700 is disposed on the inner surface of the inner layer 304. The combination of a grease (and moisture) resistant coating on the inner layer with perforations is particularly advantageous as it allows moisture to pass through the inner layer without significantly undermining the structural integrity. It will be appreciated that ordinary untreated paper or card is moisture permeable but moisture tends to weaken ordinary paper or card significantly and so where card is used for food containers, it tends to be made much thicker and/or treated to overcome this issue.

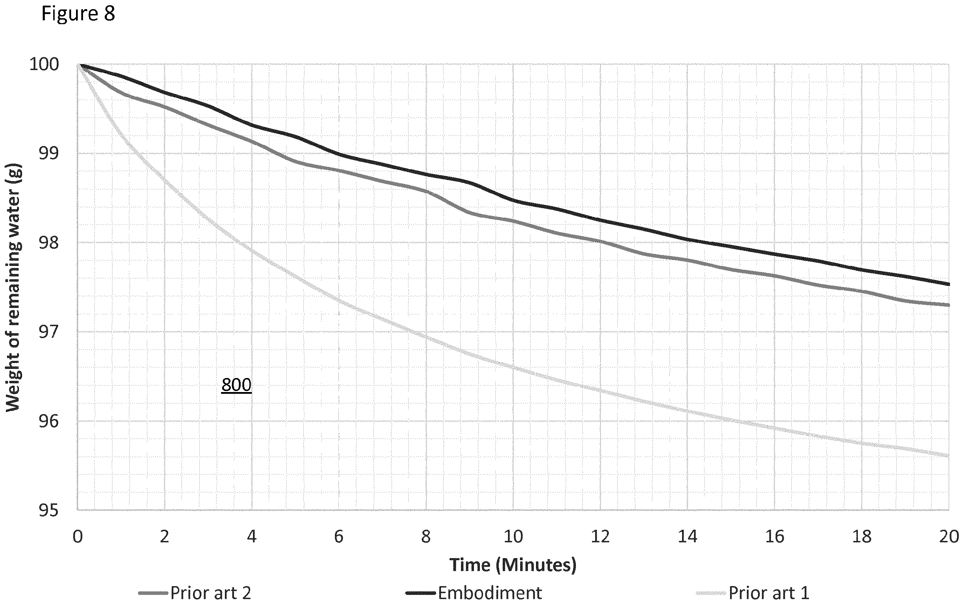

Figure 8 shows a comparison of the water loss between two prior art container and an embodiment of the invention. This graph 800 shows the weight of water remaining in food containers as a function of time after 100 ml of boiling water is poured into each. The first prior art (Prior art 1) represents a generic open clamshell container, the second (Prior art 2) represents a generic closed clamshell container and finally data for an embodiment of the invention is shown where a modified closed clamshell is represented. As can be seen in the graph, Prior art 1 loses water at a far higher rate and after 20 minutes has lost over 4% of the initial mass of water. While this may be indicative that any food is less likely to be soggy as significant amounts of water have been removed, the loss of water is likely accompanied by a significant loss of heat which is not desirable.

Prior art 2 retains water far better than Prior art 1 as the closing of the generic clamshell serves to reduce the flow of moist air from the container. However, there is still a loss of 2% after 12 minutes which can be improved upon. The embodiment of the present invention loses less water that both Prior art 1 and 2 with only 1.75% of the water lost after 12 minutes. The modified clamshell used in the embodiment represented on the graph has extended side on the bottom section that allow a better seal to be achieved when the container is closed.

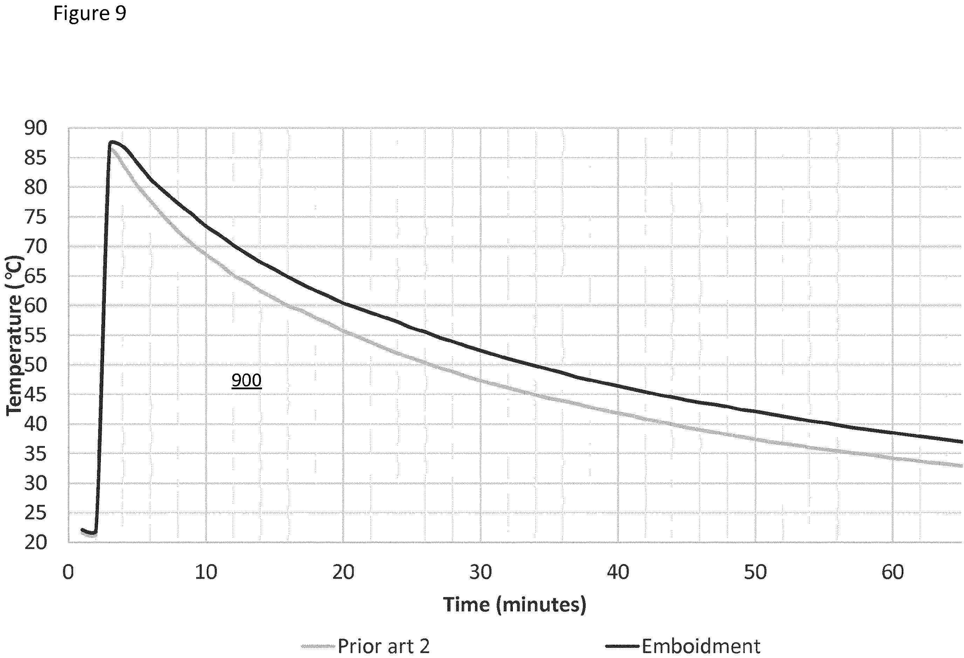

Figure 9 shows the data for the same Prior art 2 and embodiment as Figure 8 but compares the air temperature within the container after 100ml of boiling water is added to each and the containers closed. The embodiment of the current invention maintains a consistently higher temperature throughout the time frame of the experiment. After half an hour, the temperature within the Prior art 2 container has dropped an additional 5°C compared to the embodiment. This represents an improvement in the heat retention of the embodiment of over 10% when compared to the prior art.

Based on both Figures 8 and 9, the present invention can be implemented in such a way that both the water and heat retention are better than that of the prior art.

As mentioned above, the material does not have to be rigid. The middle layer may provide the largest contribution to the rigidity of the container. This may be similar to cardboard and therefore the container may represent a box, such as those depicted in Figures 1 and 2. In this embodiment, the middle layer would separate the inner and outer layer and resist shear movement between the two layers. Alternatively, the middle layer may be flexible, which can enable different types of container, such as bags, to be formed. As described in more detail below, to enable a more flexible material, the middle layer may be formed of a non-woven fibre. As the skilled person will appreciate, features described above in relation to the material used to form the container may equally be applied to the more flexible material used to form the bag.

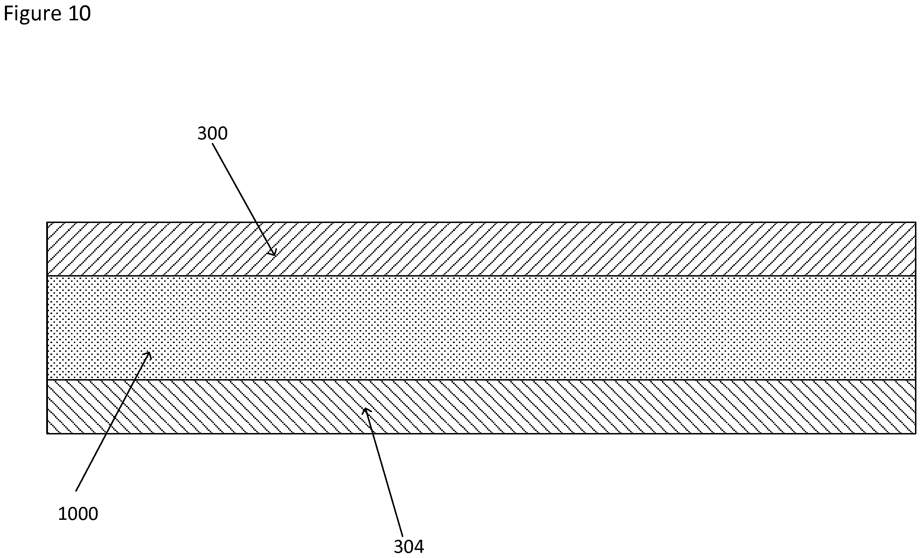

Figure 10 illustrates an embodiment that does not fall within the scope of claim 1. It shows a material comprising a first moisture permeable inner layer 304, a second non-moisture permeable outer layer 300 and a third insulating middle layer 1000 between the first and second layers. This material is suitable for forming a container for enclosing a food item. The first layer 304 allows moisture to transfer through into the middle layer 1000 of the material, thereby reducing the amount of water that condenses in the container, in contact with the food. The middle layer 1000 acts as an insulating layer and may additionally be moisture tolerant meaning that the condensation of moisture in the middle layer will not significantly reduce the insulating effects or any structural benefits the middle layer provides to the container. The outer layer 300 is non-moisture permeable to prevent moisture from escaping the container which would cause the latent heat of the water condensation to be lost to the environment. In contrast, adding this outer layer traps the moisture in the middle layer 1000 where it condenses and the latent heat can be directed back towards the food contents of the container.

The inner 304 and outer 300 layers could be a variety of materials. Due to the required moisture permeability of the inner layer 304, the best choice is a paper although a permeable plastic layer could also be used. The outer layer 300 is similar in structure to the inner layer 304 and could be made out of paper, plastic or other suitable materials.

The middle layer 1000 should be an insulating material such as expanded polystyrene (EPS) or wool. In particular, wood or cellulose-based fibres can be carded and needle punched to form a material that is wool-like in its structure. Such a material has a structural integrity sufficient to enable it to be formed with a consistent thickness of between 5 and 10mm and provided in a roll to a manufacturing process for manufacturing the food containers described herein.

The main purpose of this material is to provide a layer of low thermal conductivity to reduce heat loss across the material of the container. The layer 1000 may be flexible such that the material can be made into a bag for containing food. Therefore a non-woven fibre may be preferred such as micro-slit paper, shredded paper, cellulose fibres or wool. To address environmental concerns that come with disposable containers, the middle layer 1000 may be chosen to be recyclable, biodegradable or compostable. There are some plastics that possess these qualities but a better material has been found in cellulose based non-woven fibres. Materials such as micro-slit paper provide the required insulation while being more environmentally friendly compared to the alternatives. An additional requirement of the middle layer 1000 might be that it is moisture tolerant such that water can condense in the middle layer 1000 and not significantly decrease its insulating properties or cause significant structural damage.

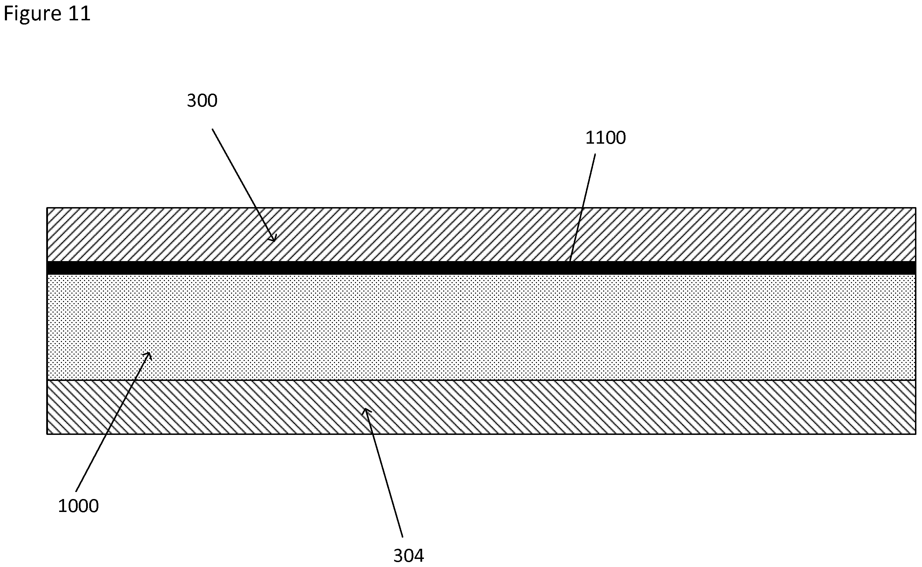

Figure 11 illustrates an embodiment that does not fall within the scope of claim 1. It shows the previously described three layer structure with an additional coating 1100 on the inner surface of the outer layer 300. This coating 1100 is non-moisture permeable, such that moisture from the body of the container, that has permeated the inner 304 layer of the material, cannot leave the outer layer 300 of the container and remains within the middle layer 1000 of the bag. This causes a larger amount of water to condense and release latent heat within the container, helping in keeping the food contents of the bag warm.

Many materials could be used for this coating 1100. The most common of these would be a plastic coating as waterproof plastic coatings can be easily produced. Alternatively, a metal coating could be applied to the outer layer 300 to prevent moisture being transported across the material. This could be formed outside of the material and bonded to the inner surface of the outer layer 300 such as thin aluminium foil or deposited directly onto the outer layer 300 by processes such as vacuum deposition.

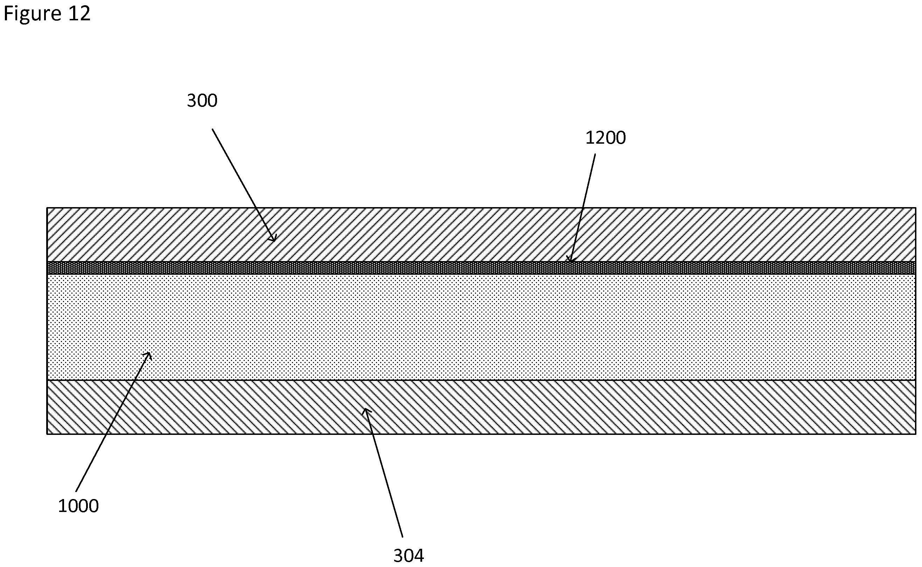

Figure 12 illustrates an embodiment that does not fall within the scope of claim 1. It shows the three layered structure as depicted in Figure 10 with the addition of an insulating coating 1200 that acts to enhance the insulation of the material. This is optimally located on the inner surface of the outer layer 300 as water can permeate the material no further than this, therefore allowing the insulating coating to retain heat from the food and from the latent heat that the condensing moisture releases.

This coating 1200 can be any material with a low thermal conductivity such as EPS or with infrared (IR) reflective properties such as aluminium foil. The latter of these is more effective as the middle layer already acts as a low thermal conductivity layer and helps reduce conduction of heat from the container however it is not necessarily good at retaining IR radiating emitted from inside the container. Therefore, there could be a more significant insulating contribution to be made by an IR reflective coating. This could be a metal foil that is formed separately to the outer layer or a metal formed through vacuum deposition such as the deposition of aluminium. The benefit of vacuum deposition is the reduced amount of metallic material required. Additionally, if the outer layer is a recyclable paper, the vacuum deposition of metal does not prevent the paper from being recyclable. It is possible that the function of a non-moisture permeable layer 1100 and insulating layer 1200 are combined into a single layer such as a vacuum deposited aluminium coating.

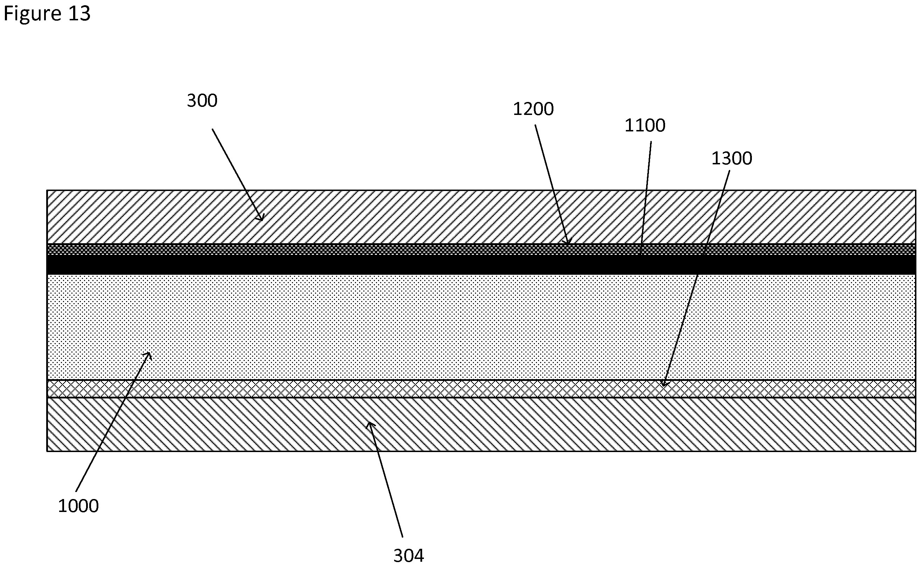

Figure 13 illustrates an embodiment that does not fall within the scope of claim 1. It depicts the three layered structure of Figure 10 along with both the non-moisture permeable coating 1100 and insulating coating 1200 described above and shown in the previous figures. In addition to this, there is an additional permeability layer 1300 on the outer surface of the inner layer 304. This allows for the finer control of moisture permeability of the inner layer 304.

In particular, an additional permeability layer may be used to prevent the complete saturation of the middle layer 1000 of the material. For example, when the inner layer 304 is composed of a material with too high moisture permeability and excessive amounts of water would condense in the middle layer 1000, this permeability coating 1300 may be provided to reduce the effective moisture permeability or porosity of the inner layer 304 and prevent structural or insulation problems. Alternatively, this inner layer 304 may itself be manufactured with the desired porosity by design.

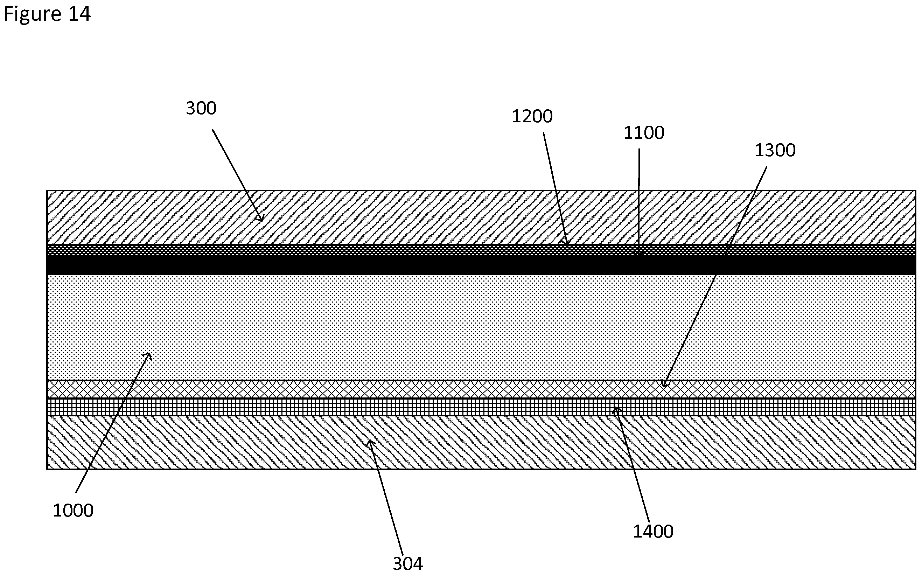

Figure 14 illustrates an embodiment that does not fall within the scope of claim 1. It shows the material of Figure 13 with the addition of a heat sealing layer 1400 disposed on the outer surface of the inner layer 304. Such a layer is useful when it comes to forming the container itself as it allows for the three layers with appropriate coatings to be prepared and then heat treated to secure them to each other. The heat sealing layer may be formed of polyethylene or more preferably, a plant based, water based substance.

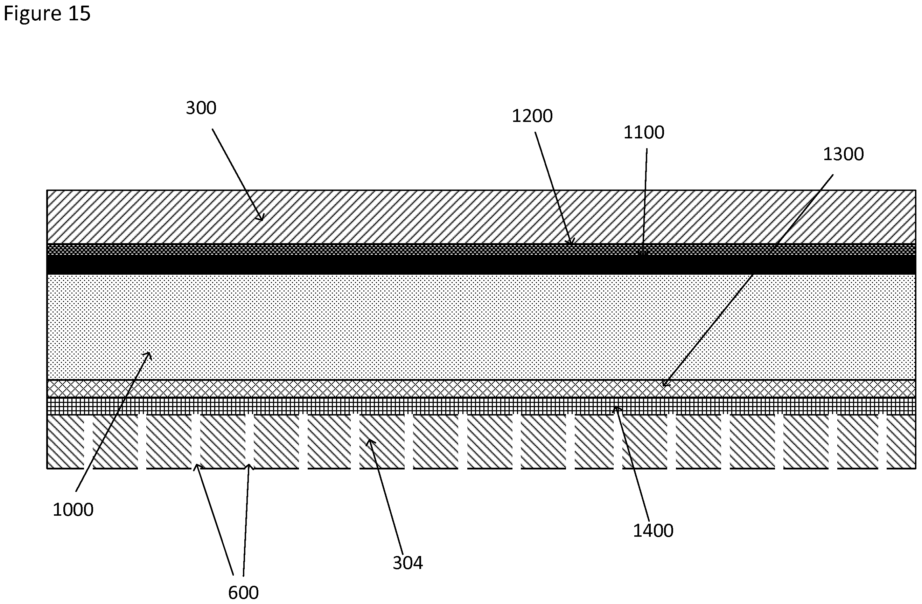

Figure 15 illustrates an embodiment that does not fall within the scope of claim 1. It shows the material of Figure 14 wherein the inner layer 304 is perforated 600. This allows the moist air from inside the container to flow away from the food and into the middle layer 1000 where the moisture can condense.

These perforations 600 can vary in size and separation depending on the material of the inner 304 or middle layer 1000. They can be formed before the material is assembled, while a web of the inner layer 304 is separate from the webs of the other layers. Alternatively, the inner layer 304 may be perforated 600 when already combined into the material of the container.

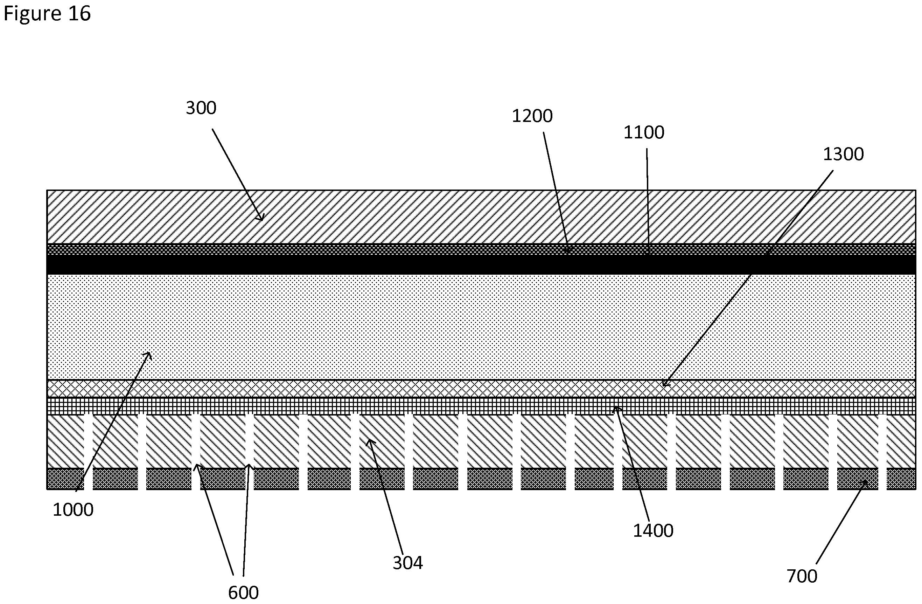

Figure 16 illustrates an embodiment that does not fall within the scope of claim 1. It shows the material of Figure 15 with the addition of a grease resistant coating 700 on the inner surface of the inner layer 304. This helps prevent grease or grease-like substances, which may be present in a food item that is enclosed in the container, from leaking into the material and causing damage and degradation of the material or structure of the container.

This layer can also be recyclable and/or compostable, which when all of the other materials are recyclable means that the whole container can be considered recyclable as a whole.

The materials described in Figures 10 to 16 do not have any restrictions placed on their rigidity, it is therefore possible that the material may be flexible and could be formed into the shape of a bag. The shape of this bag may be well known such as that of a paper takeaway food bag. The bag may also be temporarily sealable through roll top closures, adhesives, slotted handles or ties. This allows the bag to be sealed for transporting the food, retaining as much heat as possible.

In many embodiments of the present invention, the inner and outer layers are composed of paper. The paper used can comprise virgin fibres or recycled fibres and can be bleached or unbleached.

As described herein, the materials making up the containers may have an additional grease resistant coating or layer, particularly on the inner surface of the inner layer. In one embodiment, acrylic acid emulsions, such as an acrylic acid ester, may be used. Such a coating may also be used to provide the heat-sealing functionality described above. However, for a recyclable container, wax and plastics-based coatings such as polyethylene, are avoided. Furthermore, environmental considerations point away from using fluouro-chemical treatments that could be used to provide grease-resistance to the container surface. Instead, a plant based, water based substance is preferred that is recyclable and compostable. Suitable substances comprises palm oil, soya bean oil, engineered starches or other natural products. Furthermore, the coating can provide grease resistance ranging from KIT 5 to KIT 12.

It will be appreciated that some containers will require both an inner grease-resistant coating and a heat-sealing coating that enables the container to be formed by holding together multiple layers of the material and heating them under pressure. In particular, material that is used to form food bags will typically require both a grease-resistant layer and heat-sealing layer. Preferably both functionalities are provided in a single layer, such as by using an acrylic acid emulsion as described above.

In other embodiments, such as in the formation of clam-shell type containers, while a grease resistant coating may be useful, no heat sealing properties are required and a different type of grease resistant coating may therefore be used.

The process of vacuum depositing aluminium on the inner surface of the outer layer comprises the steps of applying a lacquer coating followed by vapour deposition of aluminium. Another lacquer top coat is then applied. As it is desirable to make the container recyclable and/or compostable this lacquer coating is renewable and has a weight range of 1 gram per square meter (gsm) to 3 gsm.

In some embodiments, preferred grammages of each layer may be chosen. In a bag application, this could be 35 gsm to 150 gsm for the inner layer, 300 gsm to 1500 gsm for the middle layer and 35 gsm to 150 gsm for the outer layer. In a rigid container, such as a box, this could be 50 gsm to 150 gsm for the inner layer, 50 gsm to 250 gsm for the middle layer and 50 gsm to 150 gsm for the outer layer. These values are preferable as they provide sufficient insulation while not requiring excessive resources.

In applications in the food service industry it is common for food containers to be decorated with distinctive markings and advertising. As described herein, the inner surface of the inner layer 304 and the outer surface of the outer layer 300 of the container may also be prepared in such a way that they can be printed on. This may involve the deposition of an additional layer that can receive printing ink.

With the growing desire for more environmentally friendly solutions, the need for disposable food packaging and containers that are recyclable or compostable is growing. In some embodiment of the current invention all layers of the container may be recyclable or compostable. This can be achieved through the use of paper inner and outer layers with specifically chosen grease resistant layer, additional insulating layers or sizing substance that are recyclable or compostable.

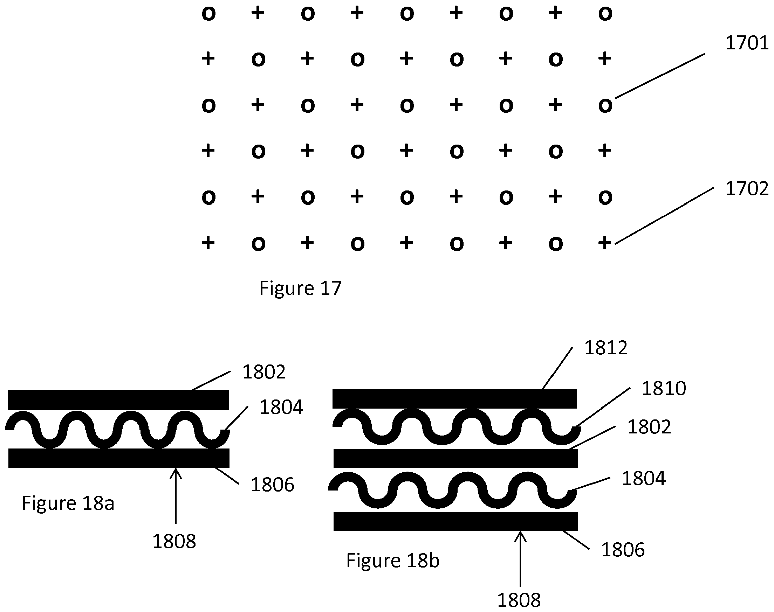

Features of another embodiment of a food packaging material are illustrated in Figs. 17 to 21. In this embodiment, the middle (or "third") layer in the material undulates in two perpendicular directions across the plane of the layer. Fig. 17 is a schematic diagram of a layer shown from above illustrating the form of the layer in which the "+" symbol 1702 indicates a local maximum, or convex area of the surface, and the "o" symbol 1701 indicates a local minimum or concave area of the surface. The surface of the material therefore undulates both across and along the material.

In the embodiment of Fig. 17, each hollow and each raised portion has a generally semicircular cross section so that, if a cross section of the material is taken either along or across the material, the cross section has a sinusoidal form as illustrated in the middle layer of Fig. 18a. Hence the material of Fig. 17 can be referred to as having a "cup-and-ball" form. The skilled person will appreciate that other cross-sectional shapes are possible, for example the hollow and raised areas could have generally triangular or polygonal cross-sectional shapes. The material can generally be described as an "embossed" material.

The material of Fig. 17 comprises a paper-based product, such as paper, card or paperboard. The use of a paper or cellulose-based material provides an absorbent, lightweight, inexpensive layer that is straightforward to shape into the desired profile, such as the cup-and-ball profile. Such a material can also be used in a flexible packaging, or can be made into a more rigid structure by attaching the outer surfaces of the cup and ball shapes onto upper and lower layers. Moreover, the material is a moisture-permeable material.

The material used for the middle layer, and its thickness, rigidity and strength can be selected based on the desired properties and application of the final packaging. Moreover, the insulating properties of the material can be "tuned", for example by increasing the number of cup-and-ball embossings per unit area.

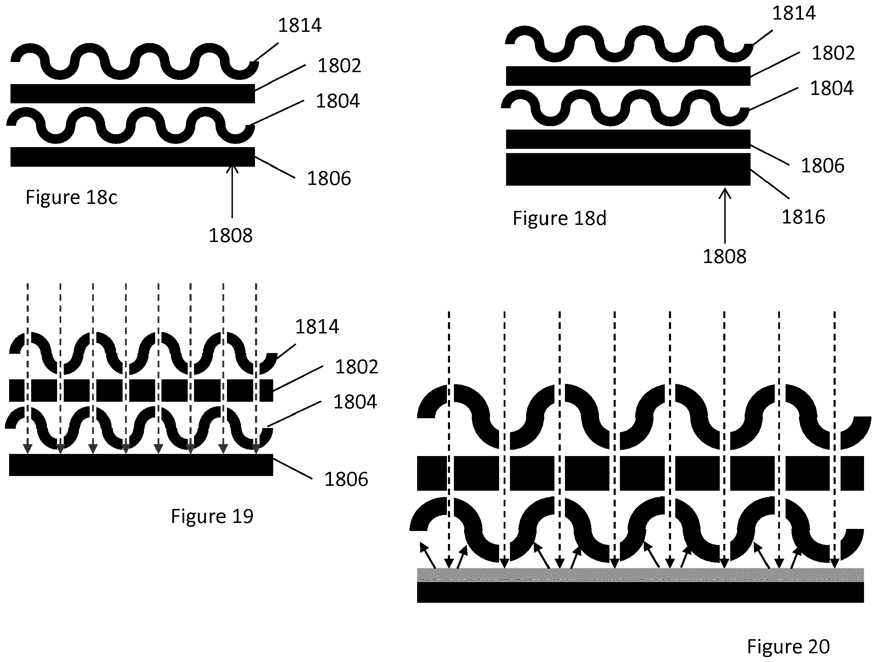

Specific designs of packaging materials that may be formed using the cup and ball material of Fig. 17 will now be described with reference to Figs. 18-21. It will be appreciated that equivalent packaging structures can also be formed using the corrugated middle layers described above and therefore features of Figs. 18-21 can be applied to the corrugated embodiments previously described.

Fig. 18a illustrates a 3-layer packaging material according to one embodiment. This is similar to the corrugated-layered structures described above, but using the cup-and-ball embossed middle layer 1804 of Fig. 17 instead of a corrugated or fluted layer. As described for the preceding embodiments, the inner layer 1802 may be coated with a grease-resistant coating and may have perforations to enable water vapour to pass through the inner layer 1802 to the middle layer 1804 for absorption. Moreover, the outer layer 1806 may be coated with grease-resistant or water-resistant coatings and may have printed text, pictures or instructions on its external surface 1808. This is a non-reinforced packaging material.

Fig. 18b illustrates a 5-layer packaging material also without a reinforced layer. In this embodiment, an additional absorbent, embossed middle layer 1810 and an additional moisture-permeable inner layer 1812 have been added to provide further structural stability to the packaging and additional insulation and absorbency.

Fig. 18c is illustrates a 4-layer packaging material, which comprises the 3-layer material of Fig. 18a and a further inner undulating layer, or liner, 1814 arranged to be positioned next to the food or whatever is held within the packaging. This additional liner holds the packaging contents away from the moisture-permeable inner layer to reduce the chances of the packaging and food becoming damp and provides additional insulation for heat and absorption of moisture in the packaging. The additional liner is moisture-permeable and may be made of exactly the same material as the middle layer 1804, which simplifies manufacture. However, in some embodiments, the material of the liner 1814 may differ slightly from the material of the inner layer 1804, since it may be useful to make the inner layer 1804 from a more absorbent material and the liner from a stronger, more structurally stable material so that it retains its shape when the container contents (particularly warm, moist contents) are placed upon it.

In many embodiments, the liner 1814 is treated with a grease-barrier or grease-resistant coating to prevent staining when in contact with food or other greasy products.

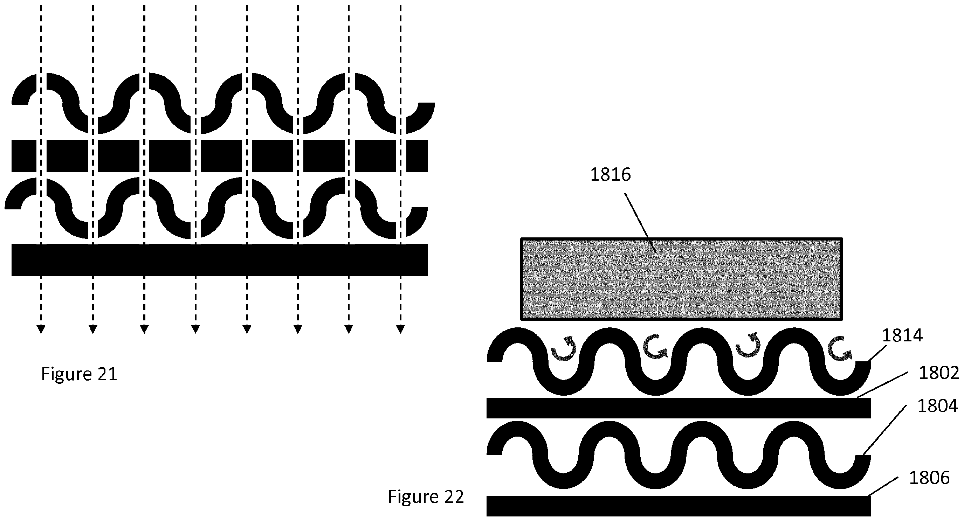

Fig. 22 illustrates one embodiment of the 4-layer packaging material of Fig. 18c in use. In Fig. 22, a hot food item 1816 has been placed on the liner 1814 of the packaging material. Moisture and heat from the food circulates within the hollows or cups of the inner liner. Due to the cup-and-ball profile of the inner liner, however, the heat remains trapped in the hollows of the liner and the food therefore retains it heat for longer. Moreover, since the liner 1814 is moisture-permeable, moisture released by the food passes through the liner 1814 and through or into the inner layer 1802 and middle layer 1804 of the packaging. Some moisture may also be absorbed into the liner material. Since the moisture is absorbed away from the food, and the bottom surface of the food is not entirely sitting on an absorbent layer, the food does not re-absorb moisture and become damp, even if the absorbent middle layer 1804 absorbs enough water vapour that it becomes quite wet.

In summary, as illustrated in Fig. 22, this embodiment enables the use of an embossed surface to increase the air circulation between the areas of contact of the contained food article and prevent the build-up of water vapour.

Figure 18d illustrates a 5-layer packaging material having a reinforced layer. The reinforced layer may be a thicker or heavier paperboard, such as cardboard, or may be manufactured from another material. Since heat is trapped within the inner layers 1802, 1814 of the packaging and moisture is trapped within the middle and outer layers 1804, 1806 of the packaging, the additional reinforcing layer can be made of any material that is suitable for the intended use of the packaging, for example a wooden, metal or plastic (such as expanded polystyrene) layer could be added to create a more solid packaging container.

Fig. 19 illustrates the 4-layer packaging material of Fig. 18c having perforated layers. As the skilled person will appreciate, perforated layers may be provided in any of the other embodiments described above. Preferably, the liner 1814, inner layer 1802 and middle layer 1804 are all perforated to enable the moist air released by food within the packaging to pass as quickly and easily as possible through the inner 3 layers of the packaging to the moisture-absorbent middle layer 1804, where it can be absorbed away from the surface of the food.

Figure 20 illustrates the packaging material of Fig. 19 further incorporating a metallised layer. The use of a perforated, embossed liner 1814 facilitates the removal of moisture away from food. In particular, the perforation in the inner liner 1814 allows for the quick transfer of moisture away from the inside of the packaging system to the metallised outer-layer, maintaining food quality. As described above, the metallised surface of the outer layer prevents loss of moisture from the outer surface of the container and provides a surface that encourages condensation of the moisture out of the air passing out of the inside of the container.

In one embodiment, the metallised layer comprises a thin vapour deposit of aluminium directly onto the surface of the paper or board. Vacuum metallisation is considered recyclable and compostable by many published sources as opposed to transfer metallisation. Hence use of a vacuum metallised top liner with a reflective surface orientated inside the pack provides a recyclable layer that can ensure containment of InfraRed (IR) energy through IR reflection whilst maintaining a printable outer layer for packaging graphics.

By way of contrast, Fig. 21 illustrates heat loss from a further 4-layer packaging material that does not include a metallised layer on the inside of the outer layer.

Use of a cup-and-ball embossed middle layer can increase heat retention as compared to a corrugated inner layer by reducing the opportunity for heat to travel along the corrugated passageways and away from the food.
A particular embodiment provides a non-vented "airtight" box design using corrugate materials with optimised insulative properties combined with material and design features that ensure the containment of heat energy, both real and latent, to provide extended heat insulation whilst controlling relative humidity conditions within the packaging to maintain food quality in terms of temperature and texture. Features include use of multilayer cup and ball board construction, specific pack design to eliminate or minimize air gaps, use of perforated and moisture resistant middle ply, use of vacuum metallised top liner (outer layer) and use of a grease resistant perforated inner liner.

The embodiments described and illustrated in Figs. 17-22 can be manufactured using the manufacturing methods already described above. In particular, flexible or rigid packaging can be formed depending on requirements by fixing the embossed middle layer within the outer and inner layers at many or only a few points across the packaging surface.

Once formed into a layered structure, the material can be cut according to pre-designed templates to form packaging bags or more rigid and preferably "airtight" containers,

In particular, the arrangements and materials described and illustrated in Figs. 17 - 22 can be used in the manufacture of the food packaging boxes already described above, and it will be appreciated that the addition of further undulating layers can increase the stability and rigidity of the boxes.

Alternatively, the materials described above, in particular in relation to Figs. 17-22, can also be used to form a flexible food packaging material that may be used to wrap food or to form more flexible containers such as bags to carry food.

Moreover, it is noted that features of the earlier embodiments, such as metallised layers, perforations of various sizes and frequencies and manufacture from biodegradable materials, can be applied to the packaging manufactured using the embossed middle layer and liner.

## Claims

1. A food packaging material for enclosing food, the material comprising:
a first, moisture-permeable inner layer (304);
a second, moisture-impermeable outer layer (300); and
a third, insulating moisture-tolerant layer (400) disposed between the first and second layers and spacing the first and second layer apart, wherein the third layer has an undulating form comprising voids;
wherein the first, second and third layers are arranged such that moisture emanating from food within the container passes through the first layer and the third layer and condenses on the second, moisture-impermeable outer layer; and
wherein the first, second and third layers comprise paper or cardboard.

2. The food packaging material of claim 1 wherein the third layer (400) has a form that undulates in two perpendicular directions across its surface

3. The food packaging material of claim 1 or 2 wherein the third layer (400) comprises an embossed layer, optionally a cup-and-ball embossed layer.

4. The food packaging material of claim 1 wherein the third layer (400) comprises a corrugated or honeycomb material, optionally a b-flute corrugated material.

5. The food packaging material of any of claims 1 to 4 wherein the third layer (400) is attached to the first and second layers to resist shear movement between the first and second layers and to provide rigidity to the food packaging material.

6. The food packaging material of any of claims 1 to 5 wherein the first layer (304) is perforated (600), optionally further wherein the third layer (400) is perforated.

7. The food packaging material of any of claims 1 to 6 wherein the second layer (300) comprises an inner surface and an outer surface, the third layer (400) being arranged next to the inner surface of the second layer and the material further comprising a coating on the inner surface of the second layer (500).

8. The food packaging material of claim 7 wherein the coating renders the second layer (300) moisture impermeable and/or enhances the insulating properties of the second layer.

9. The food packaging material of claim 7 or 8 wherein the coating is an infrared-reflective or heat-reflective coating, optionally a vacuum deposited metallised coating.

10. The food packaging material of any of claims 1 to 9 wherein the first layer (304) comprises an inner surface and an outer surface, the third layer (400) being arranged next to the outer surface of the first layer, the material further comprising a grease resistant coating (700) disposed on the inner surface of the first layer.

11. The food packaging material of any of claims 1 to 10 further comprising a fourth, moisture-permeable liner layer attached to the inner surface of the first inner layer (304), the fourth liner layer having an undulating form, optionally wherein the fourth liner layer is perforated.

12. The food packaging material of any of claims 1 to 11 further comprising at least one further, insulating moisture-tolerant layer having an undulating form comprising voids.

13. The food packaging material of any of claims 1 to 12 wherein the grammage of the material is less than 300gsm, preferably around 200gsm.

14. A method of manufacturing a food packaging material, the method comprising:
providing a first web (304) of a moisture-permeable material;
providing a second web (300) of a moisture-impermeable material; and
providing a third web (400) of an insulating moisture-tolerant material, the material of the third web having an undulating form comprising voids;
arranging the third web between the first and the second web, spacing the first and the second webs apart;
coupling the material of the third web to the materials of the first and the second webs; and
wherein the first, second and third layers comprise paper or cardboard.

## Patentansprüche

1. Ein Lebensmittelverpackungsmaterial zum Umschließen von Lebensmittel, wobei das Material Folgendes beinhaltet:
eine erste, feuchtigkeitsdurchlässige Innenlage (304);
eine zweite, feuchtigkeitsundurchlässige Außenanlage (300); und
eine dritte, isolierende, feuchtigkeitstolerante Lage (400), die zwischen der ersten und zweiten Lage liegt und die erste und zweite Lage voneinander beabstandet, wobei die dritte Lage eine schlängelnde Form aufweist, die Zwischenräume beinhaltet;
wobei die erste, zweite und dritte Lage so angeordnet sind, dass Feuchtigkeit, die von Lebensmittel innerhalb des Behältnisses austritt, durch die erste Lage und die dritte Lage hindurch geht und auf der zweiten feuchtigkeitsundurchlässigen Außenanlage kondensiert; und
wobei die erste, zweite und dritte Lage Papier oder Pappkarton beinhalten.

2. Lebensmittelverpackungsmaterial gemäß Anspruch 1, wobei die dritte Lage (400) eine Form aufweist, die in zwei senkrechten Richtungen über ihre Oberfläche schlängelt.

3. Lebensmittelverpackungsmaterial gemäß Anspruch 1 oder 2, wobei die dritte Lage (400) eine geprägte Lage, optional eine kugelschalig geprägte Lage, beinhaltet.

4. Lebensmittelverpackungsmaterial gemäß Anspruch 1, wobei die dritte Lage (400) ein gewelltes oder wabenförmiges Material, optional ein in B-Wellen gewelltes Material, beinhaltet.

5. Lebensmittelverpackungsmaterial gemäß einem der Ansprüche 1 bis 4, wobei die dritte Lage (400) an der ersten und zweiten Lage befestigt ist, um einer Schwerbewegung zwischen der ersten und zweiten Lage zu widerstehen und um dem Lebensmittelverpackungsmaterial Steifigkeit bereitzustellen.

6. Lebensmittelverpackungsmaterial gemäß einem der Ansprüche 1 bis 5, wobei die erste Lage (304) perforiert (600) ist, wobei optional ferner die dritte Lage (400) perforiert ist.

7. Lebensmittelverpackungsmaterial gemäß einem der Ansprüche 1 bis 6, wobei die zweite Lage (300) eine Innenfläche und eine Außenfläche beinhaltet, wobei die dritte Lage (400) neben der Innenfläche der zweiten Lage angeordnet ist und das Material ferner eine Beschichtung auf der Innenfläche der zweiten Lage (500) beinhaltet.

8. Lebensmittelverpackungsmaterial gemäß Anspruch 7, wobei die Beschichtung die zweite Lage (300) feuchtigkeitsundurchlässig macht und/oder die isolierenden Eigenschaften der zweiten Lage verstärkt.

9. Lebensmittelverpackungsmaterial gemäß Anspruch 7 oder 8, wobei die Beschichtung eine infrarotreflektierende oder wärmereflektierende Beschichtung, optional eine im Vakuum abgeschiedene metallisierte Beschichtung, ist.

10. Lebensmittelverpackungsmaterial gemäß einem der Ansprüche 1 bis 9, wobei die erste Lage (304) eine Innenfläche und eine Außenfläche beinhaltet, wobei die dritte Lage (400) neben der Außenfläche der ersten Lage angeordnet ist, wobei das Material ferner eine fettbeständige Beschichtung (700) beinhaltet, die auf der Innenfläche der ersten Lage liegt.

11. Lebensmittelverpackungsmaterial gemäß einem der Ansprüche 1 bis 10, das ferner eine vierte, feuchtigkeitsdurchlässige Futterlage beinhaltet, die an der Innenfläche der ersten Innenlage (304) befestigt ist, wobei die vierte Futterlage eine schlängelnde Form aufweist, wobei optional die vierte Futterlage perforiert ist.

12. Lebensmittelverpackungsmaterial gemäß einem der Ansprüche 1 bis 11, das ferner mindestens eine weitere, isolierende, feuchtigkeitstolerante Lage beinhaltet, die eine schlängelnde Form aufweist, die Zwischenräume beinhaltet.

13. Lebensmittelverpackungsmaterial gemäß einem der Ansprüche 1 bis 12, wobei die Grammatur des Materials weniger als 300 g/m², bevorzugt ungefähr 200 g/m², ist.

14. Ein Verfahren zum Herstellen eines Lebensmittelverpackungsmaterials, wobei das Verfahren Folgendes beinhaltet:
Bereitstellen einer ersten Bahn (304) eines feuchtigkeitsdurchlässigen Materials;
Bereitstellen einer zweiten Bahn (300) eines feuchtigkeitsundurchlässigen Materials; und
Bereitstellen einer dritten Bahn (400) eines isolierenden, feuchtigkeitstoleranten Materials, wobei das Material der dritten Bahn eine schlängelnde Form aufweist, die Zwischenräume beinhaltet;
Anordnen der dritten Bahn zwischen der ersten und der zweiten Bahn, wobei die erste und zweite Bahn voneinander beabstandet werden;
Koppeln des Materials der dritten Bahn an die Materialien der ersten und der zweiten Bahn; und
wobei die erste, zweite und dritte Lage Papier oder Pappkarton beinhalten.

## Revendications

1. Matériau d'emballage alimentaire pour contenir des aliments, le matériau comprenant :
une première couche intérieure perméable à l'humidité (304) ;
une deuxième couche extérieure imperméable à l'humidité (300) ; et
une troisième couche isolante tolérante à l'humidité (400) disposée entre les première et deuxième couches et espaçant la première et la deuxième couche l'une de l'autre, dans lequel la troisième couche présente une forme ondulée comportant des vides;
dans lequel les première, deuxième et troisième couches sont disposées de telle sorte que l'humidité émanant des aliments à l'intérieur du contenant passe à travers la première couche et la troisième couche et se condense sur la deuxième couche extérieure imperméable à l'humidité; et
dans lequel les première, deuxième et troisième couches comprennent du papier ou du carton.

2. Matériau d'emballage alimentaire selon la revendication 1, dans lequel la troisième couche (400) a une forme qui ondule dans deux directions perpendiculaires sur toute sa surface.

3. Matériau d'emballage alimentaire selon la revendication 1 ou 2, dans lequel la troisième couche (400) comprend une couche gaufrée, éventuellement une couche gaufrée à rotule.

4. Matériau d'emballage alimentaire selon la revendication 1, dans lequel la troisième couche (400) comprend un matériau ondulé ou en nid d'abeille, éventuellement un matériau ondulé à cannelure B.

5. Matériau d'emballage alimentaire selon l'une quelconque des revendications 1 à 4, dans lequel la troisième couche (400) est fixée aux première et deuxième couches pour résister à un mouvement de cisaillement entre les première et deuxième couches et pour conférer une rigidité au matériau d'emballage alimentaire.

6. Matériau d'emballage alimentaire selon l'une quelconque des revendications 1 à 5, dans lequel la première couche (304) est perforée (600), en outre facultativement dans lequel la troisième couche (400) est perforée.

7. Matériau d'emballage alimentaire selon l'une quelconque des revendications 1 à 6, dans lequel la deuxième couche (300) comprend une surface intérieure et une surface extérieure, la troisième couche (400) étant disposée à côté de la surface intérieure de la deuxième couche et le matériau comprenant en outre un revêtement sur la surface intérieure de la deuxième couche (500).

8. Matériau d'emballage alimentaire selon la revendication 7, dans lequel le revêtement rend la deuxième couche (300) imperméable à l'humidité et/ou améliore les propriétés d'isolation de la deuxième couche.

9. Matériau d'emballage alimentaire selon la revendication 7 ou 8, dans lequel le revêtement est un revêtement réfléchissant l'infrarouge ou réfléchissant la chaleur, éventuellement un revêtement métallisé déposé sous vide.

10. Matériau d'emballage alimentaire selon l'une quelconque des revendications 1 à 9, dans lequel la première couche (304) comprend une surface intérieure et une surface extérieure, la troisième couche (400) étant disposée à côté de la surface extérieure de la première couche, le matériau comprenant en outre un revêtement résistant à la graisse (700) disposé sur la surface intérieure de la première couche.

11. Matériau d'emballage alimentaire selon l'une quelconque des revendications 1 à 10, comprenant en outre une quatrième couche de revêtement perméable à l'humidité fixée à la surface intérieure de la première couche intérieure (304), la quatrième couche de revêtement ayant une forme ondulée, éventuellement, dans lequel la quatrième couche de revêtement est perforée.

12. Matériau d'emballage alimentaire selon l'une quelconque des revendications 1 à 11, comprenant en outre au moins une autre couche isolante tolérante à l'humidité ayant une forme ondulée comprenant des vides.

13. Matériau d'emballage alimentaire selon l'une quelconque des revendications 1 à 12, dans lequel le grammage du matériau est inférieur à 300 g/m², de préférence d'environ 200 g/m².

14. Procédé de fabrication d'un matériau d'emballage alimentaire, le procédé comprenant de :
fournir une première nappe (304) d'un matériau perméable à l'humidité;
fournir une deuxième nappe (300) d'un matériau imperméable à l'humidité; et
fournir une troisième nappe (400) d'un matériau isolant tolérant à l'humidité, le matériau de la troisième nappe ayant une forme ondulée comprenant des vides;
agencer la troisième nappe entre la première et la deuxième nappe, espaçant la première et la deuxième nappe l'une de l'autre;
coupler le matériau de la troisième nappe aux matériaux des première et deuxième nappes; et
dans lequel les première, deuxième et troisième couches comprennent du papier ou du carton.
